# EUROPÄISCHE PATENTANMELDUNG

(11) **EP 3 001 547 A1**
(43) Veröffentlichungstag der Anmeldung: **30.03.2016**
(21) Anmeldenummer: 14186351.4
(22) Anmeldetag: 25.09.2014
(51) Int. Cl.: H02K 5/20, H02K 9/04

(54) **Dezentrale Fremdbelüftung von quergekühlten Blechpaketen**

(71) Anmelder: Siemens Aktiengesellschaft, 80333 München (DE)
(72) Erfinder: Brandl, Konrad, 93107 Thalmassing (DE)

(57) **Zusammenfassung**

Die Erfindung betrifft eine Vorrichtung zur Kühlung einer elektrischen rotierenden Maschine, welche ein quergekühltes Blechpaket (1) zur Zuführung eines gasförmigen Kühlmediums mit einem Lüfter (2b) aufweist, sowie eine Maschine mit einer derartigen Vorrichtung. Für ein solches Kühlsystem, das reduzierte Strömungswiderstände, mehr Flexibilität bezüglich der Intensität der Kühlung und eine höhere Zuverlässigkeit aufweist, wird eine Vorrichtung vorgeschlagen, die mehrere Lüfteranordnungen (2), welche aus dem Lüfter (2b) und mindestens einem weiteren Lüfter (2b) bestehen, wobei die Lüfteranordnungen (2) an mindestens zwei Stellen angeordnet sind.

## Beschreibung

Die Erfindung betrifft eine Vorrichtung zur Kühlung einer elektrischen rotierenden Maschine, welche ein quergekühltes Blechpaket zur Zuführung eines gasförmigen Kühlmediums mit einem Lüfter aufweist.

Die Erfindung betrifft weiterhin eine elektrische Maschine mit mindestens einer oben genannten Vorrichtung.

In einer elektrischen rotierenden Maschine, die aus einem Ständer, der als Ständerblechpaket ausgeführt sein kann, und einem Läufer besteht, erwärmen sich die Ständerwicklungen durch die auftretenden Ströme und das Blechpaket infolge der Ummagnetisierungsverluste, wobei die entstehende Wärme abgeführt werden muss. Dies kann mittels Oberflächenkühlung mit einem gasförmigen Kühlmedium geschehen, das mit Hilfe eines Lüfters, der als Ventilator ausgeführt sein kann, über das Ständerblechpaket, welches Kühlrippen aufweist, zirkuliert. Der Lüfter kann als Eigenlüfter, der auf der Läuferwelle angekuppelt ist, oder als Fremdlüfter ausgeführt sein. Durch die Verwendung hohler Rippen oder Kanäle in einem oberflächengekühlten Motor wird die Ausbildung eines inneren Kühlkreislaufes ermöglicht. Die Kühlrippen sind längs, das heißt in axialer Richtung, ausgeführt, wobei die Strömungsrichtung des Kühlmediums über Kühlrippen oder im Gehäuse integrierte Kanäle des Ständerblechpakets in axialer Richtung verläuft. Im Vergleich zu oberflächenbelüfteten Standardmotoren weisen Maschinen mit einer Vorrichtung zur Kühlung eines quergekühlten Blechpaketes, insbesondere bei einem Motor oder Generator, eine wirksamere Kühlung und höhere Energie-Effizienz auf. Dieses Blechpaket kann aus übereinander versetzt geschichteten oder verbundenen Einzel- und/oder Teilblechpaketen bestehen, die in radialer Richtung verlaufen.

Die Maschinen mit einem quergekühlten Blechpaket weisen einen auf dem sogenannten Non Drive End, kurz NDE genannt, zentral montierten Eigen- oder Fremdlüfter auf, wie es beispielsweise in der noch nicht veröffentlichten Patentanmeldung mit dem amtlichen Aktenzeichen PCT/EP2014/053023 der Fall ist. Der zur Kühlung erforderliche Luftstrom wird axial durch ein Staubschutzgitter von der Lüftereinheit angesaugt. Der aus dem Lüfter austretende radiale Luftstrom wird dann axial in die in das Gehäuse integrierten Kühlkanäle umgelenkt und strömt in Umfangsrichtung über das quergerippte Blechpaket. Dabei nimmt es Wärme auf, wird seitlich abgeleitet und entweicht durch eine Gehäuseöffnung. In einer vorteilhaften Ausführungsform liegen zwei Kühlkanäle symmetrisch gegenüber, sind also um 180° zueinander versetzt, und die dazugehörigen Gehäuseöffnungen sind dazu jeweils um 90° versetzt.

Eine derartige Vorrichtung ist aus DE 199 43 444 A1 bekannt. Neben den bekannten Vorrichtungen zur Kühlung einer elektrischen Maschine mit einem gasförmigen Kühlmedium, insbesondere Luft, wird dort eine Vorrichtung beschrieben in der das Kühlmedium vorzugsweise an zwei symmetrisch gegenüberliegenden Einströmöffnungen direkt radial zugeführt und über dazu jeweils um 90° versetzte axiale Schlitze abgeführt wird.

Der Erfindung liegt die Aufgabe zugrunde, eine Vorrichtung anzugeben, bei der die aufwändigen Luftkanäle zur Umlenkung des Luftstroms entfallen und die daraus folgenden Strömungswiderstände zugunsten einer höheren Effizienz reduziert werden. Desweiteren soll die Intensität der Kühlung an den Bedarf der Maschine, der auch von ihrem Betriebspunkt abhängig ist, angepasst werden. Weiterhin soll die Zuverlässigkeit der Maschine durch die Vorrichtung erhöht werden.

Diese Aufgabe wird bei einer Vorrichtung der eingangs genannten Art dadurch gelöst, dass die Vorrichtung mehrere Lüfteranordnungen, welche aus dem Lüfter und mindestens einem weiteren Lüfter bestehen, aufweist, wobei die Lüfteranordnungen an mindestens zwei Stellen angeordnet sind.

Weiterhin wird die Aufgabe erfindungsgemäß durch eine elektrische Maschine gemäß Patentanspruch 8 gelöst.

Die Vorteile der Erfindung bestehen insbesondere darin, dass die Lüfteranordnungen, welche aus mehreren Lüftern bestehen, Redundanz erzeugen. Im Gegensatz zu einem zentralen Lüfter, bei dessen Ausfall die Kühlung der Maschine nicht mehr stattfindet, was zu einem Stillstand oder gar einen Defekt der Maschine führen kann, kann die Maschine beim Ausfall eines Einzellüfters von den restlichen Lüftern weiterhin mit verminderter Kühlleistung gekühlt werden. Die durch die Verwendung von Einzellüftern entstehende Redundanz trägt demnach zu einer Erhöhung der Zuverlässigkeit der Maschine bei. Die Geräuschentwicklung ist dabei geringer als bei einem zentralen Lüfter am NDE. Weiterhin führt die Verwendung von mehreren dezentral angeordneten Lüfteranordnungen zu einer gleichmäßig intensiv belüfteten Kühlfläche, was zu einer effektiven Wärmeübertragung und einer Minimierung von Temperaturunterschieden auf dem Ständerblechpaket führt. Außerdem ist die Vorrichtung für Eigen- und Fremdkühlung sowie für Oberflächen- und Durchzugsbelüftung geeignet. Da der zentrale Lüfter erfindungsgemäß durch mehrere dezentrale Lüftereinheiten ersetzt wird, ist es möglich kommerziell erhältliche Standardlüfter zu verwenden.

Bei einer bevorzugten Ausführungsform wird die Lüfteranordnung auf einer tangentialen Oberfläche eines am Blechpaket angrenzenden Freiraums befestigt, sodass das Kühlmedium radial zuführbar ist. Eine tangentiale Richtung verläuft senkrecht zu der axialen Richtung und senkrecht zu einer der radialen Richtungen. Die radialen Richtungen erstrecken sich von der Drehachse in Querschnittsebenen, auf denen die axiale Richtung senkrecht steht. Die dezentralen Lüftereinheiten sind demnach so angeordnet, dass der Luftstrom direkt auf das zu kühlende Ständerblechpaket gelenkt wird, wodurch die aufwändigen Luftkanäle der Eigenbelüftung entfallen und die Strömungswiderstände reduziert werden. Da bei einem geringeren Strömungswiderstand eine geringere Lüfterleistung bei gleichem Kühlluftstrom erforderlich ist, wird auf diese Weise die Effizienz der Anordnung erhöht.

In einer weiteren vorteilhaften Ausführungsform sind die Lüfter innerhalb einer Lüfteranordnung identisch. Ein Vorteil dieser Anordnung ist, dass die Ansteuerung von identischen Lüftern für eine gleichmäßige Kühlung leichter zu realisieren ist. Außerdem ergibt sich durch die Verwendung von identischen Lüftern durch die Abnahmemenge eine günstigere Kostenposition.

Bei einer weiteren bevorzugten Ausgestaltung sind die Lüfter innerhalb einer Lüfteranordnung in einer Kaskade, insbesondere entlang der axialen Länge des Blechpaketes, angeordnet. Ein Vorteil dieser Anordnung ist, dass die Kühlung über die gesamte axiale Länge des Blechpaketes und optional über die Wicklungsköpfe mit quergekühlten vergossenen Kühlkörpern, gleichmäßig und intensiv erfolgt, sodass in axialer Richtung nur geringe Temperaturunterschiede auftreten.

Besonders vorteilhaft ist, wenn die Vorrichtung eine Steuereinheit aufweist, die zur voneinander unabhängigen Ansteuerung der Lüfteranordnungen und/oder Lüfter vorgesehen ist. Dadurch können bei Bedarf einzelne Lüfter zu- und abgeschaltet werden. Der Kühlluftstrom lässt sich somit an den jeweiligen Betriebspunkt der Maschine anpassen was ebenfalls zu einer Erhöhung der Effizienz führt. Weiterhin lässt sich bei der Verwendung von unabhängigen Lüfteranordnungen und/oder Lüftern die Drehzahl der einzelnen Lüftereinheiten dem aktuellen Kühlbedarf der Maschine anpassen.

Bei einer weiteren vorteilhaften Ausgestaltung umfasst die Vorrichtung zusätzliche mindestens eine Lüfteranordnung zur separaten und unabhängigen Kühlung eines Wickelkopfes. Die Lüftereinheiten werden bei dieser Ausgestaltung direkt über einem Wickelkopf platziert wodurch sich nur sehr geringe Strömungsverluste ergeben und die Lüfter unabhängig von der restlichen Anordnung angesteuert werden können.

Bei einer bevorzugten Ausführungsform weist die Vorrichtung einen Temperatursensor zur Steuerung der Lüfterleistung auf. Damit kann die Lüfterdrehzahl dem aktuellen Kühlbedarf der Maschine angepasst werden. Insbesondere bei der Verwendung von mehreren, beispielsweise in den Ständerwicklungen befindlichen, Temperatursensoren, die einzelnen Lüftern oder einer Lüfteranordnung zugeordnet werden, was zu einer effektiven Wärmeübertragung und einer gleichmäßigen Temperaturverteilung auf dem Ständerblechpaket führt.

Im Folgenden wird die Erfindung anhand der in den Figuren dargestellten Ausführungsbeispiele näher beschrieben und erläutert.

Es zeigen:
- FIG 1: eine schematische Darstellung in der Seitenansicht einer Anordnung zur zentralen Eigenbelüftung einer rippengekühlten elektrischen rotierenden Maschine,
- FIG 2: eine schematische Darstellung in der Seitenansicht einer Anordnung zur zentralen Eigenbelüftung einer elektrischen rotierenden Maschine mit einem quergekühlten Ständerblechpaket,
- FIG 3: eine schematische Darstellung im Radialschnitt einer Anordnung zur dezentralen direkten Fremdbelüftung einer elektrischen rotierenden Maschine mit quergekühltem Ständerblechpaket mittels zweier gegenüberliegender Lüfteranordnungen,
- FIG 4: eine schematische dreidimensionale Darstellung einer Anordnung zur dezentralen direkten Fremdbelüftung einer elektrischen rotierenden Maschine mit quergekühltem Ständerblechpaket mittels zweier gegenüberliegender Lüfteranordnungen und
- FIG 5: eine schematische dreidimensionale Darstellung einer Anordnung zur dezentralen direkten Fremdbelüftung einer elektrischen rotierenden Maschine mit quergekühltem Ständerblechpaket mittels vierer paarweise gegenüberliegender Lüfteranordnungen.

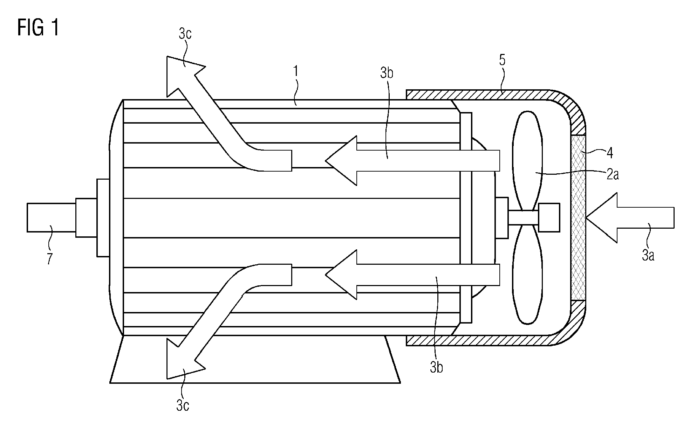

Fig 1 zeigt die schematische Darstellung einer Anordnung zur zentralen Eigenbelüftung einer rippengekühlten elektrischen rotierenden Maschine in der Seitenansicht. Ein zentraler Eigenlüfter 2a wird zur Kühlluftförderung auf das NDE der Maschine unter ein Gehäuse 5 montiert und die kalte Luft 3a wird axial vom Lüfter 2a durch ein im Gehäuse 5 integriertes Gitter 4 angesaugt. Die Strömungsrichtung 3b verläuft über Kühlrippen oder über im Gehäuse integrierte Kanäle zum zu entwärmenden Blechpaket 1. Die warme Luft 3c entweicht frontal und seitlich.

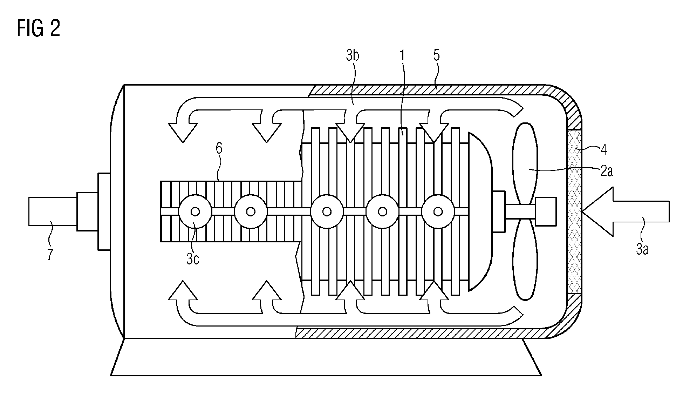

Fig 2 zeigt die schematische Darstellung einer Anordnung zur zentralen Eigenbelüftung einer elektrischen rotierenden Maschine mit einem quergekühlten Ständerblechpaket 1. Die kalte Luft 3a wird axial durch ein im Gehäuse 5 integriertes Gitter 4 von einem Eigenlüfter 2a, der wegen eines hohen Gegendrucks als Radiallüfter ausgeführt ist, angesaugt. Ein aus dem Lüfter austretender radialer Luftstrom wird axial in Kühlkanäle in Strömungsrichtung 3b umgelenkt wobei sich aufgrund der mehrfachen Umlenkungen zusätzliche Strömungswiderstände ergeben. Weiterhin strömt der Luftstrom in Umfangsrichtung über das quergerippte Blechpaket. Die warme Luft 3c entweicht dann durch eine Gehäuseöffnung 6.

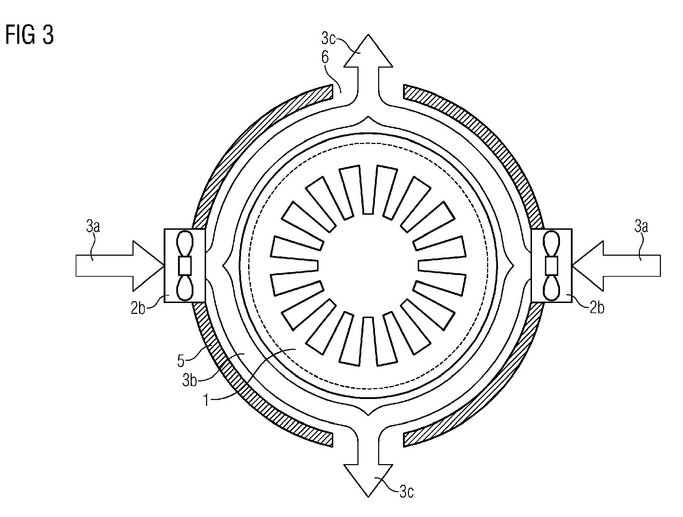

In Fig 3 ist eine schematische Darstellung einer Anordnung zur dezentralen direkten Fremdbelüftung einer elektrischen rotierenden Maschine mit quergekühltem Ständerblechpaket 1 mittels zweier gegenüberliegender Lüfter 2b im Radialschnitt gezeigt, wobei die Lüfter 2b jeweils auch in Form einer mehrere Lüfter umfassenden Lüfteranordnung ausgeführt sein können und die kalte Luft 3a radial zugeführt wird. Die Strömungsrichtung 3b der Kühlluft verläuft in Umfangsrichtung zwischen dem Gehäuse 5 und den Rippen des Ständerblechpakets 1. Die warme Luft 3c entweicht dann durch eine Gehäuseöffnung 6. Da der Eigenlüfter am NDE aus Fig 2 durch mehrere lokal arbeitende Fremdlüfter ersetzt wurde und die Kühlluftförderung deshalb ohne Umlenkungen erfolgt, ist die Effizienz aufgrund der geringeren Strömungswiderstände höher als mit einem zentralen Eigenlüfter.

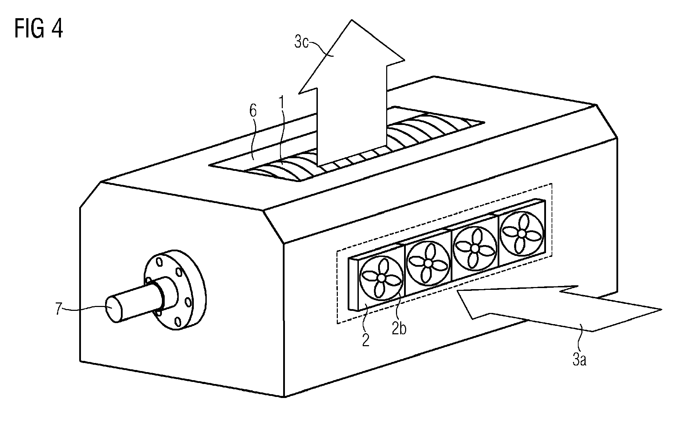

In FIG 4 ist die in FIG 3 im Radialschnitt dargestellte Anordnung dreidimensional gezeigt. Die Fremdlüfter 2b sind in einer Kaskade innerhalb der Lüfteranordnung 2 zusammengefasst und direkt über dem Ständerblechpaket 1 angeordnet. Neben der oben erläuterten höheren Effizienz durch die geringeren Strömungswiderstände ergibt sich durch die Verwendung mehrerer Lüfter eine Redundanz, die die Zuverlässigkeit der Anordnung, beispielsweise beim Ausfall eines Lüfters, dessen Kühlleistung durch die anderen Lüfter innerhalb der Anordnung ganz oder teilweise kompensiert wird, erhöht. Ebenfalls effizienzsteigern wirkt die voneinander unabhängige Ansteuerung der Lüfter, da so die einzelnen Lüfter, insbesondere bei der Verwendung einer Temperatursensorik, zu jedem Zeitpunkt die für die Maschine ideale Kühlleistung liefern.

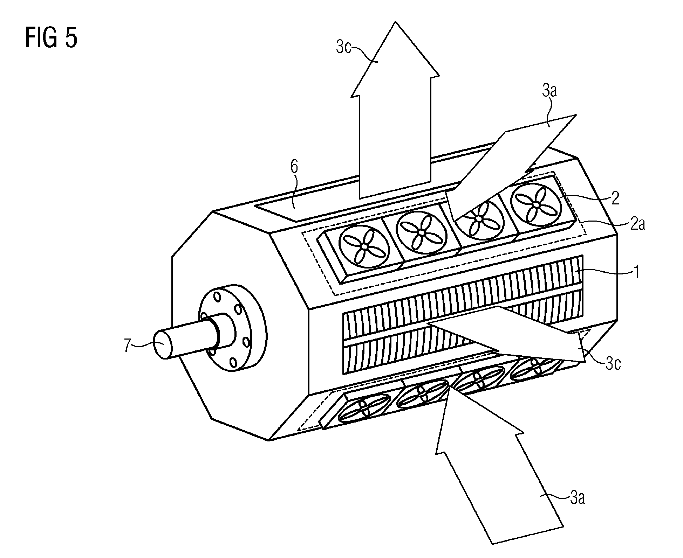

FIG 5 zeigt eine schematische Darstellung einer Anordnung zur dezentralen direkten Fremdbelüftung einer elektrischen rotierenden Maschine mit quergekühltem Ständerblechpaket 1 mittels vierer um 90° versetzt angeordneter Lüfterkaskaden 2, welche direkt über dem Ständerblechpaket 1 angeordnet sind. Ein Vorteil im Vergleich zu der in FIG 4 gezeigten Anordnung ist die Minimierung von Temperaturunterschieden auf dem Ständerblechpaket 1 in radialer Richtung, insbesondere bei großen Maschinen.

Die Erfindung betrifft eine Vorrichtung zur Kühlung einer elektrischen rotierenden Maschine, welche ein quergekühltes Blechpaket 1 zur Zuführung eines gasförmigen Kühlmediums mit einem Lüfter 2b aufweist, sowie eine Maschine mit einer derartigen Vorrichtung. Für ein solches Kühlsystem, das reduzierte Strömungswiderstände, mehr Flexibilität bezüglich der Intensität der Kühlung und eine höhere Zuverlässigkeit aufweist, wird eine Vorrichtung vorgeschlagen, die mehrere Lüfteranordnungen 2, welche aus dem Lüfter 2b und mindestens einem weiteren Lüfter 2b bestehen, wobei die Lüfteranordnungen 2 an mindestens zwei Stellen angeordnet sind.

## Patentansprüche

1. Vorrichtung zur Kühlung einer elektrischen rotierenden Maschine, welche ein quergekühltes Blechpaket (1) zur Zuführung eines gasförmigen Kühlmediums mit einem Lüfter (2b) aufweist,
**dadurch gekennzeichnet, dass** die Vorrichtung mehrere Lüfteranordnungen (2), welche aus dem Lüfter (2b) und mindestens einem weiteren Lüfter (2b) bestehen, aufweist, wobei die Lüfteranordnungen (2) an mindestens zwei Stellen angeordnet sind.

2. Vorrichtung nach Anspruch 1,
**dadurch gekennzeichnet, dass** mindestens eine der Lüfteranordnungen (2) auf einer tangentialen Oberfläche eines am Blechpaket (1) angrenzenden Freiraums befestigt ist, sodass das Kühlmedium radial zuführbar ist.

3. Vorrichtung nach einem der vorherigen Ansprüche,
**dadurch gekennzeichnet, dass** die Lüfter innerhalb einer Lüfteranordnung (2) identisch sind.

4. Vorrichtung nach einem der vorherigen Ansprüche,
**dadurch gekennzeichnet, dass** die Lüfter innerhalb einer Lüfteranordnung (2) in einer Kaskade angeordnet sind.

5. Vorrichtung nach einem der vorherigen Ansprüche,
**dadurch gekennzeichnet, dass** die Vorrichtung eine Steuereinheit aufweist, die zur voneinander unabhängigen Ansteuerung der Lüfteranordnungen (2) vorgesehen ist.

6. Vorrichtung nach einem der vorherigen Ansprüche,
**dadurch gekennzeichnet, dass** die Vorrichtung eine Steuereinheit aufweist, die zur voneinander unabhängigen Ansteuerung der Lüfter vorgesehen ist.

7. Vorrichtung nach einem der vorherigen Ansprüche,
**dadurch gekennzeichnet, dass** die Vorrichtung zusätzliche mindestens eine Lüfteranordnung (2) zur separaten und unabhängigen Kühlung eines Wickelkopfes enthält.

8. Vorrichtung nach einem der vorherigen Ansprüche,
**dadurch gekennzeichnet, dass** die Vorrichtung einen Temperatursensor zur Steuerung der Lüfterleistung aufweist.

9. Eine elektrische Maschine mit mindestens einer Vorrichtung nach den Ansprüchen 1-8.
